# EUROPÄISCHE PATENTSCHRIFT

(11) **EP 3 064 354 B1**
(45) Veröffentlichungstag und Bekanntmachung des Hinweises auf die Patenterteilung: **23.01.2019**
(21) Anmeldenummer: 16154167.7
(22) Anmeldetag: 04.02.2016
(51) Int. Cl.: B41F 33/00, B42C 1/10, B41F 13/46, G06F 3/12

(54) **VERFAHREN UND PRODUKTIONSVORRICHTUNG ZUM HERSTELLEN VON PERSONALISIERTEN DRUCKENDPRODUKTEN**
METHOD AND PRODUCTION DEVICE FOR PRODUCING PERSONALISED PRINTING END PRODUCTS
PROCÉDÉ ET DISPOSITIF DE PRODUCTION DESTINÉS A FABRIQUER DES PRODUITS D'IMPRESSION PERSONNALISÉS

(30) Priorität: 02.03.2015 CH 2762015
(43) Veröffentlichungstag der Anmeldung: 07.09.2016
(73) Patentinhaber: Ferag AG, 8340 Hinwil (CH)
(72) Erfinder: GALLATI, Rudolf, 8732 Neuhaus (CH)
(74) Vertreter: Rentsch Partner AG

(56) Entgegenhaltungen:
- EP-A1- 1 911 583
- EP-A2- 0 303 203
- DE-A1-102013 102 756
- GB-A- 2 311 282

## Beschreibung

### TECHNISCHES GEBIET

Die Erfindung bezieht sich auf ein Verfahren zum Herstellen von personalisierten Druckendprodukten. Die Erfindung bezieht sich zudem auf eine Produktionsvorrichtung zum Herstellen von personalisierten Druckendprodukten.

### STAND DER TECHNIK

"Print on Demand" bezeichnet die bedarfsgerechte Herstellung von Druckprodukten. Die Herstellung der Druckprodukte erfolgt oft auf Digitaldruckmaschinen, wobei die Druckprodukte kundenspezifische Merkmale aufweisen können, wie z.B. personalisierte QR Code und URL (QR: Quick Response, URL: Unified Resource Locator). "Print on Demand" findet Anwendung bei der Herstellung von Einzelexemplaren, Kleinstauflagen von beispielsweise bis zu zehn Exemplaren, Kleinauflagen von beispielsweise bis zu hundert Exemplaren, oder bei mittelgrossen Auflagen bis einigen hunderttausend Exemplaren. Zur Herstellung von sehr grossen Auflagen mit beispielsweise mehreren Millionen Exemplaren ist "Print on Demand" in der Regel noch zu teuer.

Aus dem Stand der Technik ist es bekannt, zur Herstellung von personalisierten Druckendprodukten ein in einem Hochleistungsverfahren wie dem Rotationsdruck kostengünstig hergestelltes Druckprodukt mit einem personalisierten Druckprodukt zu versehen, welches beispielsweise mit einer Digitaldruckmaschine hergestellt wird.

Die US 2005/0044476 zeigt das Anordnen von kundenspezifischem Inhalt in einer Broschüre. Eine Inhalts-Identifikation dient zur Personalisierung der Broschüre und wird von einem vorgedruckten Broschüren-Teil eingelesen sowie an eine Inhalts-Steuereinrichtung gesendet. Die Inhalts-Steuereinrichtung benutzt die Inhalts-Identifikation, um Instruktionen von einem Datenspeicher zu erhalten, welche zur Erstellung von einem oder mehreren frisch gedruckten Broschürenteilen dienen. Die frisch gedruckten Broschürenteile werden mit einer vorgedruckten Broschüre verbunden, um eine kundenspezifisches Broschüre zu erstellen.

Die EP 1 911 583 zeigt die Herstellung eines individualisierten Druckprodukts. Ein Hauptprodukt oder Teilprodukt wird in einem Hochleistungsdruckprozess wie im Rotationsdruck hergestellt und mit einem Identifikationsmittel versehen. Das Identifikationsmittel trägt die Information zur Identifizierung des Produkts. Das Identifikationsmittel ermöglicht die Zuordnung von in mindestens zwei weiteren nachgeschalteten Individualisierungsschritten, wie das Zufügen von Informationen zum jeweiligen Produkt. Ein adressatspezifisches digitales Druckprodukt kann eine Blog-Beilage umfassen. Das Identifikationsmittel kann Steuerinformationen umfassen, die die Bearbeitung des jeweiligen Produkts durch eine Bearbeitungseinrichtung direkt steuern.

Die DE102013102756 A1 beschreibt ein Produktionsplanungs- und -steuerungs-system (PPS) für Druckmaschinen, mit zumindest einer Annahmeschnittstelle zur Annahme von einen Druckauftrag repräsentierenden Druckauftragsdaten, mit zumindest einer ersten Planungseinrichtung zur Planung eines Druckauftrags auf Druckmaschinen der Gattung Nicht-Druckformvariabel (NDFV), vorzugsweise Offset-, Tiefdruck- oder Flexo-Druckmaschinen, wobei die erste Planungseinrichtung ausgebildet ist, um die Druckauftragsdaten mit Maschinenparametern zumindest einer NDFV-Druckmaschine zu vergleichen und Druckdaten für eine NDFV-Druckmaschine basierend auf den Druckauftragsdaten zu erzeugen, und mit zumindest einer ersten Ausgabeschnittstelle zur Ausgabe der Druckdaten an eine NDFV-Druckmaschine und an ein der NDFV-Druckmaschine nachgelagertes weiterverarbeitetes System. Das Produktionsplanungs- und -steuerungssystem weist ferner zumindest eine zweite Planungseinrichtung zur Planung eines Druckauftrags auf Druckmaschinen der Gattung DFV (Druckformvariabler)-Druckmaschine auf, wobei die zweite Planungseinrichtung ausgebildet ist, um die Druckauftragsdaten mit Maschinenparametern zumindest einer DFV-Druckmaschine zu vergleichen und Druckdaten für eine DFV-Druckmaschine basierend auf den Druckauftragsdaten zu erzeugen, sowie zumindest eine zweite Ausgabeschnittstelle zur Ausgabe der Druckdaten an eine DFV-Druckmaschine und ein der DFV-Druckmaschine nachgelagertes weiterverarbeitendes System aufweist.

Die WO 98/03347 zeigt das Zuführen von Ausgangsprodukten und/oder Zwischenprodukten als Produktströme zu Bearbeitungsschritten und das Wegführen von bearbeiteten Gegenständen als Ströme von Endprodukten. In den zugeführten und weggeführten Produktströmen werden einzelne Produkte oder Produktgruppen in einer Sequenz nacheinander gefördert. In Bearbeitungsschritten wird eine Eigenschaft eines bearbeiteten Produkts oder einer bearbeiteten Produktgruppe verändert. Sequenzwandlungen durch Produkteinschleusung, durch Produktausschleusung oder durch eine Kombination davon ermöglichen die Veränderung der Sequenz der Produkte oder Produktgruppen. Die Bearbeitungsschritte werden dadurch zu einer beliebigen Komplexität vernetzbar, wobei trotzdem eine hohe Flexibilität besteht. Sequenzwandlungen sowie Bearbeitungsschritte werden gemäss Eigenschaften der zugeführten Produkte oder Produktgruppen und/oder gemäss einer vorgegebenen, zu erstellenden Sequenz gesteuert.

Der Stand der Technik ermöglicht es nach wie vor nicht, eine hohe Leistung bei der Herstellung von personalisierten Druckendprodukten zu marktfähigen Preisen zu erzielen. Um grosse Auflagen herzustellen, sind im Stand der Technik Verfahren bekannt, die entweder sehr teuer sind oder nur eine geringen Grad der Personalisierung ermöglichen. Die im Stand der Technik bekannten Verfahren sind nicht robust gegenüber Fehlfunktionen und die Angaben über die tatsächlich hergestellten Druckendprodukte sind zu wenig verlässlich.

### DARSTELLUNG DER ERFINDUNG

Eine Aufgabe der Erfindung besteht darin, mindestens gewisse Probleme des Standes der Technik zu vermeiden oder dafür eine Lösung anzubieten.

Diese Aufgabe wird durch das im unabhängigen Patentanspruch 1 definierte Verfahren gelöst.

Das erfindungsgemässe automatisierte Verfahren zum Herstellen von personalisierten Druckendprodukten, welche jeweils eine Druckproduktkollektion und mindestens ein personalisiertes Druckprodukt aufweisen, umfasst: das Erstellen von Endprodukt-Spezifikationen, welche jeweils mindestens ein personalisiertes Druckendprodukt definieren; das Erstellen von Vertriebs-Aufträgen auf der Basis von Endprodukt-Spezifikationen, wobei ein Vertriebs-Auftrag mindestens eine Sequenz von Druckproduktkollektionen definiert; das Auslösen des Erstellens und das Erstellen von Digitaldruck-Aufträgen auf der Basis von Endprodukt-Spezifikationen und Vertriebs-Aufträgen, wobei ein Digitaldruck-Auftrag mindestens ein personalisiertes Druckprodukt definiert; das Herstellen von Druckproduktkollektionen entsprechend den Vertriebs-Aufträgen; das Herstellen von personalisierten Druckprodukten entsprechend den Digitaldruck-Aufträgen; und das Herstellen von personalisierten Druckendprodukten aus den hergestellten Druckproduktkollektionen und personalisierten Druckprodukten. Die Endprodukt-Spezifikationen definieren das personalisierte Druckendprodukt, welches durch die Entkopplung des Erstellens von Vertriebs-Aufträgen und des Erstellens von Digitaldruck-Aufträgen in hoher Auflage effizient und kostengünstig herstellbar ist.

In einer Ausführungsform wird das Herstellen von personalisierten Druckprodukten zeitlich vor dem Herstellen der Druckproduktkollektionen ausgelöst.

In einer Ausführungsform werden hergestellte personalisierte Druckprodukte in einem Zwischenspeicher zwischengespeichert.

In einer Ausführungsform wird beim Herstellen von Druckproduktkollektionen eine Fehlerüberwachung vorgenommen und fehlerhafte Druckproduktkollektionen werden repariert oder ausgeschieden und nachproduziert.

In einer Ausführungsform wird zu einer reparierten oder nachproduzierten Druckproduktkollektion ein zugehöriges personalisiertes Druckprodukt nachproduziert.

In einer Ausführungsform wird beim Herstellen eines personalisierten Druckendprodukts eine Qualitätskontrolle vorgenommen und eine zugehörige Qualitätskennzeichnung am personalisierten Druckendprodukt angebracht.

In einer Ausführungsform wird dem personalisierten Druckendprodukt ein Kontrollcode zugeordnet, welcher am personalisierten Druckendprodukt angebracht wird.

In einer Ausführungsform umfasst die Erstellung von Vertriebs-Aufträgen eine Optimierung, welche eine Belegung von Zufördereinrichtungen einer Vorrichtung zum Herstellen der personalisierten Druckendprodukte optimiert.

In einer Ausführungsform umfasst die Erstellung von Vertriebs-Aufträgen eine Optimierung, welche mindestens eine Auslieferungsroute der personalisierten Druckendprodukte optimiert.

In einer Ausführungsform ist mindestens eine Endprodukt-Spezifikation in der Form eines XML Dokuments vorgesehen.

In einer Ausführungsform ist mindestens eine Endprodukt-Spezifikation in der Form einer URL vorgesehen.

In einer Ausführungsform wird ein personalisiertes Druckendprodukt derart hergestellt, dass es einem dem personalisierten Druckendprodukt zugeordneten Adressaten ermöglicht ist, das Erstellen einer Endprodukt-Spezifikationen zu beeinflussen. Dem Adressaten ist es insbesondere ermöglicht, das Erstellen seiner Endprodukt-Spezifikationen zu beeinflussen.

In einer Ausführungsform ist ein personalisiertes Druckendprodukt derart hergestellt, dass dieses ein Mantelprodukt umfasst, welches die Druckproduktkollektion und das personalisierte Druckprodukt ummantelt.

In einer Ausführungsform wird ein personalisiertes Druckendprodukt derart hergestellt, dass das personalisierte Druckprodukt ein Umschlag ist, welcher die Druckproduktkollektion umschliesst.

In einer Ausführungsform wird ein personalisiertes Druckendprodukt derart hergestellt, dass das personalisierte Druckendprodukt eine Druckproduktkollektion und ein personalisiertes Druckprodukt aufweist, welche miteinander verklebt sind. Die Druckproduktkollektion und das personalisierte Druckprodukt sind miteinander insbesondere lösbar verklebt, wobei die Verklebung derart ausgebildet ist, dass sie sich lösen lässt ohne die Produkte zu beschädigen.

In einer Ausführungsform werden personalisierte Druckendprodukte unter Berücksichtigung von Auslieferungsrouten in Paketen angeordnet.

Die Erfindung bezieht sich ferner auf eine Produktionsvorrichtung zum Herstellen von personalisierten Druckendprodukten, umfassend: eine Steuerzentrale, die für die folgenden Schritte eingerichtet ist: Erstellen von Endprodukt-Spezifikationen, welche jeweils mindestens ein personalisiertes Druckendprodukt definieren, Erstellen von Vertriebs-Aufträgen auf der Basis von Endprodukt-Spezifikationen, wobei ein Vertriebs-Auftrag mindestens eine Sequenz von Druckproduktkollektionen definiert, und Auslösen des Erstellens und Erstellen von Digitaldruck-Aufträgen auf der Basis von Endprodukt-Spezifikationen und Vertriebs-Aufträgen, wobei ein Digitaldruck-Auftrag mindestens ein personalisiertes Druckprodukt definiert; wobei eine Fördereinrichtung mit mehreren Anlegern, eine Digitaldruckmaschine und gegebenenfalls eine Einsteckvorrichtung vorgesehen sind und die Steuerzentrale ferner für die Steuerung folgender Herstellungsschritte eingerichtet ist: Herstellen, unter Benutzung der Fördereinrichtung und den mehreren Anlegern, von Druckproduktkollektionen entsprechend den Vertriebs-Aufträgen, Herstellen, unter Benutzung der Digitaldruckmaschine, von personalisierten Druckprodukten entsprechend den Digitaldruck-Aufträgen, und Herstellen, unter Benutzung der Fördereinrichtung oder der Einsteckvorrichtung, von personalisierten Druckendprodukten aus den hergestellten Druckproduktkollektionen und personalisierten Druckprodukten.

### KURZE BESCHREIBUNG DER ZEICHNUNGEN

Anhand von Figuren, welche lediglich Ausführungsbeispiele darstellen, wird die Erfindung im Folgenden erläutert. Es zeigen:
- Fig. 1: ein Blockschema einer Ausführungsvariante des erfindungsgemässen Verfahrens zur Erstellung von personalisierten Druckendprodukten; und
- Fig. 2: schematische eine Druckweiterverarbeitungsanlage zur Durchführung des erfindungsgemässen Verfahrens zur Erstellung von personalisierten Druckendprodukten gemäss einer Ausführungsform.

### WEG(E) ZUR AUSFÜHRUNG DER ERFINDUNG

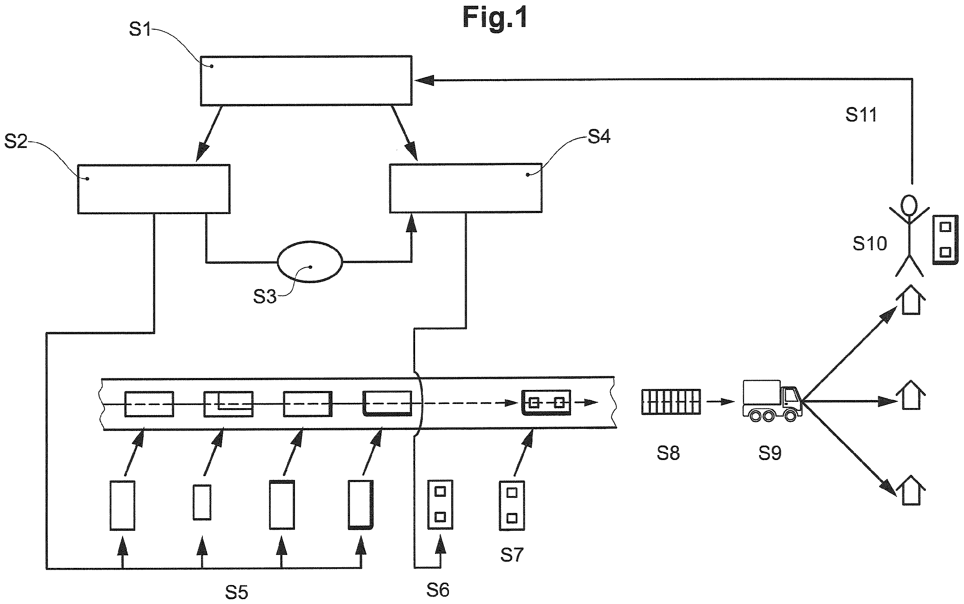

Figur 1 zeigt ein Blockschema einer Ausführungsvariante des erfindungsgemässen Verfahrens zur Herstellung von personalisierten Druckendprodukten. Im Schritt S1 wird eine Vielzahl von Endprodukt-Spezifikationen erstellt. Die Endprodukt-Spezifikationen werden beispielsweise durch ein computerisiertes Steuerungs-System einer Druckweiterverarbeitungsanlage erstellt. Jede Endprodukt-Spezifikation definiert mindestens ein adressatspezifisch personalisiertes Druckendprodukt. Eine Endprodukt-Spezifikation kann mehrere identische personalisierte Druckendprodukte definieren, welche beispielsweise einer Personengruppe zugeordnet sind. Ein personalisiertes Druckendprodukt umfasst ein oder mehrere Druckprodukte sowie mindestens ein personalisiertes Druckprodukt. Das eine oder die mehreren Druckprodukte können in einer Druckproduktkollektion vorliegen. Das personalisierte Druckprodukt ist einer Person, respektive einem Adressaten oder einer Personengruppe zugeordnet. Druckproduktkollektionen können hergestellt werden aus Druckprodukten wie Zeitschriften, Magazinen, Werbeprospekten, Katalogen, Flyern, Karten aber auch anderen flächigen Produkten wie CDs, DVDs, Warenmustern, Gutscheinen, Gutscheinheften und ähnlichem. Druckprodukte liegen in kostengünstiger Form vor und stammen vorzugsweise aus einem Hochleistungsdruckprozess wie beispielsweise einem Rotationsdruckprozess. Das mindestens eine personalisierte Druckprodukt kann auf einer Digitaldruckmaschine, einer Rollendruckmaschine, einer Bogendruckmaschine, etc. hergestellt werden.

Die Endprodukt-Spezifikationen werden aufgrund von Aufträgen zum Erstellen von personalisierten Druckendprodukten erstellt, wobei zusätzliche Informationen berücksichtigt werden können wie Informationen über die vorgenannten Druckprodukte, Stammdaten, Regeln, Adressen, demographische Daten, Werbeaufträge, geographische Daten, klimatische Daten, Daten von Nachrichtenagenturen, etc. Zur Erstellung der Endprodukt-Spezifikationen umfasst das computerisierte Steuerungs-System Routinen, Algorithmen, Datenbanken, etc, um wählbare Informationen geeignet auszuwerten. Aufgrund eines Auftrags zum Erstellen von personalisierten Druckendprodukten kann eine Endprodukt-Spezifikation zum Beispiel ein für einen Empfänger bestimmtes personalisiertes Druckendprodukt definieren, welches eine Druckproduktkollektion aufweist, die eine Fischerei-Zeitschrift und eine Fischerei-Regionalbeilage eines Fischerei-Clubs umfasst, sowie ein personalisiertes Druckprodukt in Form eines an einen Empfänger adressierten, personalisierten Fischerei-Werbeprospekts eines lokalen Fischerei-Ladens. Der personalisierte Fischerei-Werbeprospekt kann zum Beispiel einen für den Empfänger personalisierten Gutschein umfassen.

Informationen über Druckprodukte umfassen beispielsweise Angaben über Art, Anzahl, etc. der Druckprodukte, die eine Druckproduktkollektion eines personalisierten Druckendprodukts aufweisen soll. Die Informationen über Druckprodukte können Angaben umfassen, welcher Kunde welche Druckprodukte erhalten soll. Die Informationen über Druckprodukte können Angaben umfassen, welche Druckprodukte für welche Auslieferungsroute vorgesehen sind.

Informationen über Stammdaten umfassen beispielsweise Angaben über Auftraggeber, Auftragshistorie, Auftragsstatistik, etc., die bei der Herstellung von personalisierten Druckendprodukten zu berücksichtigen sind.

Informationen über Regeln umfassen beispielsweise Regeln zur Auswertung von Stammdaten, die bei der Herstellung von personalisierten Druckendprodukten zu berücksichtigen sind. Die Informationen über Regeln können Angaben umfassen über die Zuordnung zwischen Druckprodukten oder Druckproduktkollektionen und personalisierten Druckprodukten. Die Informationen über Regeln können Angaben umfassen, welche Schritte für die Überwachung der Herstellung von personalisierten Druckendprodukten vorgesehen sind. Die Informationen über Regeln können Angaben umfassen, welche Schritte vorzunehmen sind, falls bei der Herstellung von personalisierten Druckendprodukten Fehler, Lücken, etc. entstehen.

Informationen über Adressen umfassen beispielsweise Land, Region, Ortschaft, Stadtteil, Quartier, Strasse, umliegende Einkaufszentren, umliegende POI (POI: Point of Interest), etc. von einem oder mehreren Empfänger von personalisierten Druckendprodukten.

Informationen über demographische Daten umfassen beispielsweise statistische Angaben über Personengruppen betreffend Alter, Ausbildung, Wohnstruktur (Mieter, Eigentümer), Einwohnerdichte, Beruf, Einkommen, Interessen, Wünschen, Haustieren, etc..

Informationen über Werbeaufträge umfassen beispielsweise Bilder, Texte, Rabatte, etc. eines Produkts. Informationen über Werbeaufträge können Angaben umfassen, in welchem Gebiet, für welche Kundenschicht, etc. ein Werbeauftrag vorgesehen ist.

Informationen über geographische Daten umfassen beispielsweise Angaben über Städte, Dörfer, Seen, Flüsse, Grenzverlauf von Ländern, etc..

Informationen über klimatische Daten umfassen beispielsweise vergangene und/oder prognostizierte Wetterdaten. Informationen über klimatische Daten können mit Informationen über Werbeaufträge verknüpft sein.

Informationen über Daten von Nachrichtenagenturen umfassen beispielsweise internationale Nachrichten, nationale Nachrichten, regionale Nachrichten, Wirtschaftsnachrichten, Sportresultate, etc. Informationen über Daten von Nachrichtenagenturen können mit Informationen über Werbeaufträge verknüpft sein.

Die genannten Informationen können untereinander verknüpft sein. Beispielsweise können Informationen über Adressen mit Informationen über demographische Daten verknüpft sein. Es sind verschiedenste Verknüpfungen anwendbar.

Die Endprodukt-Spezifikationen können in der Form von strukturierten Daten wie zum Beispiel in der Form von einem oder mehreren XML Dokumenten (XML: eXtended Markup Language) erstellt werden. Die Endprodukt-Spezifikationen können in der Form von Zugriffsinformationen wie in der Form von URL (URL: Unified Resource Locator) erstellt werden, wobei die eigentliche Endprodukt-Spezifikation unter der URL Adresse abgespeichert ist. Es kann für jede Endprodukt-Spezifikation ein einzelnes XML Dokument vorgesehen sein. Es kann für jede Endprodukt-Spezifikation eine einzelne URL vorgesehen sein. Es können mehrere Endprodukt-Spezifikationen einem einzelnen XML Dokument zugeordnet sein. Es können mehrere Endprodukt-Spezifikationen einer einzelnen URL zugeordnet sein.

Im Schritt S2 werden auf der Basis der Endprodukt-Spezifikationen eine oder mehrere Vertriebes-Aufträge erstellt. Die Vertriebs-Aufträge definieren mindestens eine Sequenz von Druckendprodukten, welche herzustellen und zu vertreiben ist. Aus der Sequenz von Druckendprodukten ergibt sich eine Anzahl Druckendprodukte, die herzustellen und zu vertreiben ist. Die Vertriebs-Aufträge können den oben erwähnten Aufträgen zum Erstellen von personalisierten Druckendprodukten entsprechen.

Die Erstellung der Vertriebs-Aufträge kann einen Optimierungs-Schritt umfassen, um eine Abfolge beim Herstellen von personalisierten Druckendprodukten derart auszugestalten, dass eine Vorrichtung zum Herstellen von personalisierten Druckendprodukten optimal ausgelastet ist.

Die Erstellung der Vertriebs-Aufträge kann einen Optimierungs-Schritt umfassen, um die personalisierten Druckendprodukte entsprechend einer Reihenfolge oder Sequenz herzustellen, die auf gewünschte Auslieferungsrouten abgestimmt ist. Im Schritt S3 wird auf der Basis der Endprodukt-Spezifikationen und der erstellten Vertriebs-Aufträge die Erstellung von einem oder mehreren Digitaldruck-Aufträgen ausgelöst.

Im Schritt S4 werden aufgrund des Schritts S3 Digitaldruck-Aufträge erstellt. Ein Digitaldruck-Auftrag definiert mindestens ein personalisiertes Druckprodukt, welches herzustellen und mindestens einer Druckproduktkollektion beizufügen ist, um ein personalisiertes Druckendprodukt zu erhalten.

Im Schritt S5 wird eine Sammelvorrichtung in Betrieb genommen, wobei gemäss den Vertriebs-Aufträgen mehrere Druckprodukte gesammelt werden und daraus Druckproduktkollektionen hergestellt werden.

Im Schritt S6 wird eine Digitaldruck-Maschine in Betrieb genommen, wobei gemäss den Digitaldruck-Aufträgen mehrere personalisierte Druckprodukte hergestellt werden.

Im Schritt S7 werden personalisierte Druckprodukte und die zugehörigen Druckproduktkollektionen zusammengestellt und daraus personalisierte Druckendprodukte hergestellt.

Im Schritt S8 werden personalisierte Druckendprodukte zusammengefasst und daraus Versandpakete hergestellt, wobei ein Versandpaket eines oder mehrere der folgenden Merkmale aufweisen kann: eine Umschnürung, eine Folie die das Versandpaket umschliesst, eine Beschriftung, ein Deckblatt, ein Etikett.

Im Schritt S9 werden die Versandpakte auf Auslieferungswagen geladen und die Versandpakete werden an Auslieferungspunkte von Auslieferungsrouten transportiert.

Im Schritt S10 werden personalisierte Druckendprodukte den Versandpaketen entnommen und den betreffenden Empfänger zugestellt. Ein Empfänger kann eine Person oder eine Personengruppe umfassen.

Im Schritt S11 greift der Empfänger eines personalisierten Druckendprodukts, insbesondere unter Benutzung von am personalisierten Druckendprodukt angebrachten optisch lesbarer Daten wie einem QR Code oder einer URL, auf ein computerisiertes Steuerungs-System zu, um das Erstellen einer Endprodukt-Spezifikationen zu beeinflussen. In einer Variante ist die URL einer Endprodukt-Spezifikation zugeordnet und kommt bei der Herstellung von personalisierten Druckendprodukten zur Anwendung. Der Empfänger hat dadurch die Möglichkeit, noch bis zur Herstellung des betreffenden personalisierten Druckendprodukts dieses zu beeinflussen, um beispielsweise nicht mehr gewünschte Druckprodukte des personalisierten Druckendprodukts durch neu gewünschte Druckprodukte zu ersetzen.

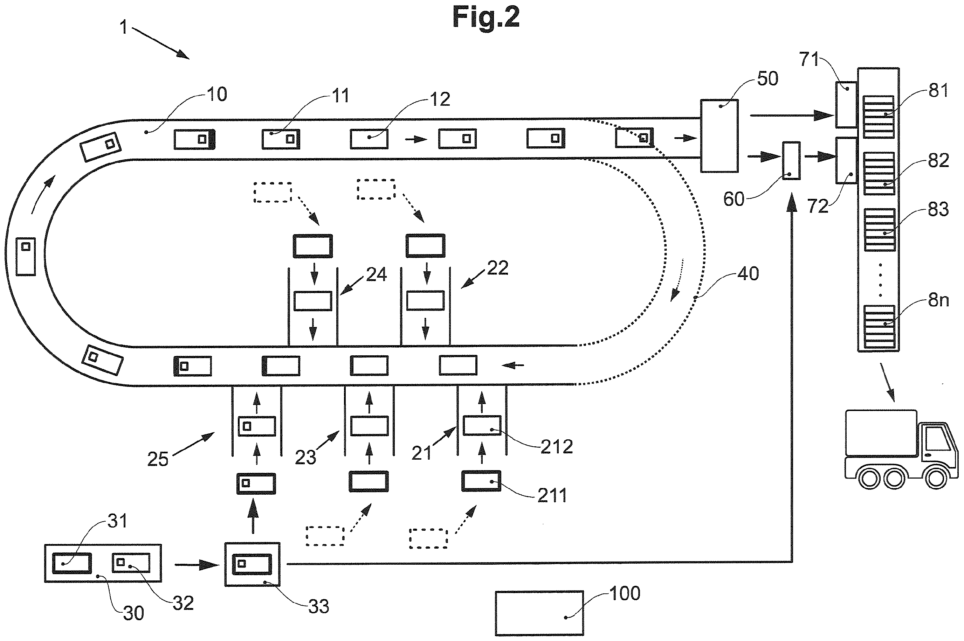

Figur 2 zeigt schematisch eine erfindungsgemässe Produktionsvorrichtung 1 zum Herstellen von personalisierten Druckendprodukten. Der Produktionsvorrichtung 1 ist eine Steuerzentrale 100 zugeordnet, welche insbesondere als computerisierte Steuerzentrale ausgebildet ist und eingerichtet ist, die Funktionen der Produktionsvorrichtung 1 zu steuern. Dazu sind Softwareprogramme vorgesehen. Ferner sind Steuerverbindungen vorgesehen, um Steuersignale an Bestandteile der Produktionsanlage 1 zu übertragen und diese Bestandteile zu steuern.

Die Produktionsvorrichtung 1 umfasst eine Fördereinrichtung 10. Die Fördereinrichtung 10 ist derart ausgeführt, dass sowohl einzelne Druckprodukte als auch Druckproduktkollektionen, personalisierte Druckendprodukte, etc. gefördert werden können. Die Fördereinrichtung 10 kann getaktet arbeiten und für einen hohen Durchsatz wie beispielsweise mehrere zehntausend pro Stunde ausgelegt sein.

Entlang einer Teilstrecke der Fördereinrichtung 10 sind mehrere Anleger 21, 22, 23, 24, 25 angeordnet. Die Anleger 21, 22, 23, 24, 25 sind eingerichtet, um der Fördereinrichtung 10 Druckprodukte zuzuführen.

Die mehreren Anleger 21, 22, 23, 24, 25 sind jeweils zumindest ähnlich oder identisch ausgerüstet. In der Figur 2 sind für den Anleger mit Bezugszeichen 21 Merkmale gezeigt, welche nachfolgend beschrieben werden und für die weiteren Anleger 22, 23, 24, 25 ähnlich oder identisch vorgesehen sind.

Wie für den Anleger mit Bezugszeichen 21 dargestellt, ist ein Stapel 211 vorgesehen, welcher aufeinandergestapelte Druckprodukte aufweist. Wie in Figur 2 schematisch gestrichelt dargestellt ist, wird der Stapel 211 im Verlauf der Herstellung von personalisierten Druckendprodukten mit jeweils gleichen Druckprodukten nachgefüllt oder durch andere Druckprodukte ersetzt. Wie für den Anleger mit Bezugszeichen 21 dargestellt, wird ein Druckprodukt 212 vom Stapel 211 der Fördereinrichtung 10 zugeführt.

Durch das Zuführen von Druckprodukten zur Fördereinrichtung 10, welches insbesondere getaktet erfolgt, werden auf der Fördereinrichtung 10 Druckproduktkollektionen gebildet.

Um ein personalisiertes Druckendprodukt zu bilden, können die Druckproduktkollektionen wahlweise mit einem personalisierten Druckprodukt versehen werden. Die Herstellung erfolgt aufgrund von Druckendprodukt-Spezifikationen. Die Herstellung wird durch die Steuerzentrale 100 gesteuert.

Wie in Figur 2 schematisch dargestellt, ist zur Herstellung von personalisierten Druckprodukten eine Digitaldruckmaschine 30 vorgesehen. Die Digitaldruckmaschine 30 weist einen Stapel mit unbedruckten Druckprodukten 31 auf. Die Digitaldruckmaschine 30 ist eingerichtet, um ein unbedrucktes Druckprodukt 31 in zu bedrucken und ein personalisiertes Druckprodukt 32 herzustellen. Die Herstellung erfolgt aufgrund von Druckendprodukt-Spezifikationen. Die Herstellung wird durch die Steuerzentrale 100 gesteuert.

Beim Herstellen der personalisierten Druckprodukten 32 werden Platzhalter, die einen verfügbaren Platz auf dem unbedruckten Druckprodukt 31 definieren, mit personalisiertem Inhalt bedruckt. Das unbedruckte Druckprodukt 31 kann beispielsweise drei Platzhalter aufweisen. Beim Herstellen eines ersten personalisierten Druckprodukts wird ein erster Platzhalter mit Informationen betreffend ein Produkt A bedruckt, ein zweiter Platzhalter wird mit Informationen betreffend ein Produkt B bedruckt und ein dritter Platzhalter wird mit Informationen betreffend ein Produkt C bedruckt. Beispielsweise beim Herstellen eines zweiten personalisierten Druckprodukts wird der erste Platzhalter mit Informationen betreffend ein Produkt D bedruckt, der zweite Platzhalter wird mit Informationen betreffend das Produkt B bedruckt und der dritte Platzhalter wir mit Informationen betreffend das Produkt A bedruckt. Die Herstellung der personalisierten Druckprodukte 32 erfolgt aufgrund von Druckendprodukt-Spezifikationen. Die Herstellung wird durch die Steuerzentrale gesteuert.

Das personalisierte Druckprodukt 32 kann mit einem Kontrollcode versehen werden, welcher aufgrund der Druckendprodukt-Spezifikation erstellt wird. Der Kontrollcode kann dazu dienen, bei späteren Verarbeitungsschritten eine Kontrolle über die tatsächlich hergestellten Druckendprodukte vorzunehmen. Der Kontrollcode kann Angaben über das Druckendprodukt enthalten, wie beispielsweise aus welchen Druckprodukten die betreffende Druckproduktkollektion zusammengestellt ist und wie das personalisierte Druckendprodukt ausgestaltet ist. Der Kontrollcode ermöglicht es zu verfolgen, ob das personalisierte Druckendprodukt richtig produziert wurde, ob es in der richtigen Sequenz produzierte wurde, ob es sich für die Auslieferung im richtigen Paket befindet, etc. Dadurch ergeben sich verlässliche Informationen über die hergestellten personalisierten Druckendprodukte.

Das personalisierte Druckprodukt 32 kann der Fördereinrichtung 10 unmittelbar nach dem Bedrucken zugeführt werden und einer Druckproduktkollektion hinzugefügt werden, um ein personalisiertes Druckendprodukt zu bilden.

Das personalisierte Druckprodukt 32 kann in einem Zwischenspeicher 33 zwischengespeichert werden. Durch das Zwischenspeichern können Geschwindigkeitsschwankungen der Digitaldruckmaschine 30 und der Fördereinrichtung 10 voneinander entkoppelt werden.

Wie in Figur 2 schematisch dargestellt ist, können personalisierte Druckprodukte 32 in Stapeln einem Anleger 25 zugeführt werden, welcher eingerichtet ist, jeweils ein personalisiertes Druckprodukt 213 dem Stapel zu entnehmen und der Fördereinrichtung 10 zuzuführen.

Die Fördereinrichtung kann eine Vorlaufstrecke aufweisen, an welcher die Anleger 21, 22, 23, 24, 25 angeordnet sind und eine Rücklaufstrecke, auf welcher die betreffenden Produkte in zur Vorlaufstrecke entgegengesetzter Richtung gefördert werden. Dies ermöglicht es, eine optionale Rückführung 40 vorzusehen, um bei einem Fehler das betreffende Produkt erneut der Vorlaufstrecke zuzuführen und zu vervollständigen. In Figur 2 ist auf der Rücklaufstrecke ein korrekt zusammengestelltes Druckendprodukt 11 hervorgehoben. Dieses ist für die direkte Weiterleitung an die nachfolgend beschriebenen Weiterverarbeitungseinrichtungen 50, 60 vorgesehen. In Figur 2 ist auf der Rücklaufstrecke ein fehlerhaft zusammengestelltes Druckendprodukt 12 hervorgehoben. Dieses ist für die Weiterleitung an die Rückführung 40 vorgesehen, um eine Reparatur vorzunehmen.

In einer Variante wird ein fehlerhaftes Produkt einfach entfernt, beispielsweise durch Entnahme oder Fallenlassen an einer bestimmten Stelle der Fördereinrichtung 10.

Wie in der Figur 2 schematisch dargestellt schliesst an die Fördereinrichtung 10 eine oder mehrere Weiterverarbeitungseinrichtungen 50, 60 an. Die Weiterverarbeitungseinrichtungen 50, 60 können für das Verkleben von Druckprodukten, für das Folieren von Druckprodukten, für das Einstecken von Druckprodukten in Umschläge, etc. ausgebildet sein. Wie in Figur 2 schematisch dargestellt, kann das personalisierte Druckprodukt 32 einen personalisierten Umschlag betreffen, welcher eine Einsteckvorrichtung 60 zugeführt wird, um Druckprodukte in den personalisierten Umschlag einzustecken und ein personalisiertes Druckendprodukt zu bilden.

Wie in Figur 2 schematisch dargestellt, schliessen an die Weiterverarbeitungseinrichtungen 50, 60 eine oder mehrere Verpackungseinrichtungen 71, 72 an, um die personalisierten Druckendprodukte in Paketen 81, 82, ..., 8n zusammenzufassen und der Auslieferung zuzuführen.

Die beschriebene Herstellung von personalisierten Druckendprodukten ermöglicht eine kostengünstige Herstellung von grossen Auflagen mit personalisierten Druckendprodukten. Die personalisierten Druckendprodukte können sehr genau auf den Empfänger des personalisierten Druckendprodukts abgestimmt werden. So kann beispielsweise einem Empfänger der bei schönem Wetter gerne Golf spielt und bei schlechtem Wetter gerne zum Fischen geht die Tageszeitung mit den für einen betreffenden Monat geltenden Prospekten über das Fischen und über das Golf spielen ausgerüstet werden. Zusätzlich kann das personalisierte Druckendprodukt entsprechend der aktuellen Wetterprognose durch tagesaktuelles Herstellen eines personalisierten Druckprodukts entweder mit aktuellen Informationen über das Golf spielen oder mit aktuellen Informationen über das Fischen versehen werden.

## Patentansprüche

1. Ein automatisiertes Verfahren zum Herstellen von personalisierten Druckendprodukten, welche jeweils eine Druckproduktkollektion und mindestens ein personalisiertes Druckprodukt aufweisen, umfassend:
Erstellen (S1) von Endprodukt-Spezifikationen, welche jeweils mindestens ein personalisiertes Druckendprodukt definieren,
Erstellen (S2) von Vertriebs-Aufträgen auf der Basis von Endprodukt-Spezifikationen, wobei ein Vertriebs-Auftrag mindestens eine Sequenz von Druckproduktkollektionen definiert,
Auslösen (S3) des Erstellens und Erstellen (S4) von Digitaldruck-Aufträgen auf der Basis von Endprodukt-Spezifikationen und Vertriebs-Aufträgen, wobei ein Digitaldruck-Auftrag mindestens ein personalisiertes Druckprodukt definiert,
Herstellen (S5) von Druckproduktkollektionen entsprechend den Vertriebs-Aufträgen,
Herstellen (S6) von personalisierten Druckprodukten entsprechend den Digitaldruck-Aufträgen, und
Herstellen (S7) von personalisierten Druckendprodukten aus den hergestellten Druckproduktkollektionen und personalisierten Druckprodukten.

2. Das Verfahren nach Anspruch 1, wobei das Herstellen von personalisierten Druckprodukten zeitlich vor dem Herstellen der Druckproduktkollektionen ausgelöst wird.

3. Das Verfahren nach Anspruch 1 oder 2, wobei hergestellte personalisierte Druckprodukte in einem Zwischenspeicher zwischengespeichert werden.

4. Das Verfahren nach einem der Ansprüche 1 bis 3, wobei beim Herstellen von Druckproduktkollektionen eine Fehlerüberwachung vorgenommen wird und fehlerhafte Druckproduktkollektionen repariert oder ausgeschieden und nachproduziert werden.

5. Das Verfahren nach Anspruch 4, wobei zu einer reparierten oder nachproduzierten Druckproduktkollektion ein zugehöriges personalisiertes Druckprodukt nachproduziert wird.

6. Das Verfahren nach einem der Ansprüche 1 bis 5, wobei beim Herstellen eines personalisierten Druckendprodukts eine Qualitätskontrolle vorgenommen wird und eine zugehörige Qualitätskennzeichnung am personalisierten Druckendprodukt angebracht wird.

7. Das Verfahren nach einem der Ansprüche 1 bis 6, wobei dem personalisierten Druckendprodukt ein Kontrollcode zugeordnet wird, welcher am personalisierten Druckendprodukt angebracht wird.

8. Das Verfahren nach einem der Ansprüche 1 bis 7, wobei die Erstellung von Vertriebs-Aufträgen eine Optimierung umfasst, welche eine Belegung von Zufördereinrichtungen einer Vorrichtung zum Herstellen der personalisierten Druckendprodukte optimiert.

9. Das Verfahren nach einem der Ansprüche 1 bis 8, wobei die Erstellung von Vertriebs-Aufträgen eine Optimierung umfasst, welche mindestens eine Auslieferungsroute der personalisierten Druckendprodukte optimiert.

10. Das Verfahren nach einem der Ansprüche 1 bis 9, wobei mindestens eine Endprodukt-Spezifikation in der Form eines XML Dokuments vorgesehen ist.

11. Das Verfahren nach einem der Ansprüche 1 bis 10, wobei mindestens eine Endprodukt-Spezifikation in der Form einer URL vorgesehen ist.

12. Das Verfahren nach einem der Ansprüche 1 bis 11, wobei ein personalisiertes Druckendprodukt derart hergestellt wird, dass es einem dem personalisierten Druckendprodukt zugeordneten Adressaten ermöglicht ist, das Erstellen einer Endprodukt-Spezifikationen zu beeinflussen.

13. Verfahren nach einem der Ansprüche 1 bis 12, wobei ein personalisiertes Druckendprodukt derart hergestellt wird, dass dieses ein Mantelprodukt umfasst, welches die Druckproduktkollektion und das personalisierte Druckprodukt ummantelt.

14. Verfahren nach einem der Ansprüche 1 bis 13, wobei ein personalisiertes Druckendprodukt derart hergestellt wird, dass das personalisierte Druckprodukt ein Umschlag ist, welcher die Druckproduktkollektion umschliesst.

15. Verfahren nach einem der Ansprüche 1 bis 14, wobei ein personalisiertes Druckendprodukt derart hergestellt wird, dass das personalisierte Druckendprodukt eine Druckproduktkollektion und ein personalisiertes Druckprodukt aufweist, welche miteinander verklebt sind, wobei die Verklebung vorzugsweise ohne Beschädigung der Produkte lösbar ist.

16. Verfahren nach einem der Ansprüche 1 bis 15, wobei personalisierte Druckendprodukte unter Berücksichtigung von Auslieferungsrouten in Paketen angeordnet werden.

17. Produktionsvorrichtung zum Herstellen von personalisierten Druckendprodukten, umfassend:
eine Steuerzentrale (100), die für die folgenden Schritte eingerichtet ist:
Erstellen (S1) von Endprodukt-Spezifikationen, welche jeweils mindestens ein personalisiertes Druckendprodukt definieren,
Erstellen (S2) von Vertriebs-Aufträgen auf der Basis von Endprodukt-Spezifikationen, wobei ein Vertriebs-Auftrag mindestens eine Sequenz von Druckproduktkollektionen definiert, und
Auslösen (S3) des Erstellens und Erstellen (S4) von Digitaldruck-Aufträgen auf der Basis von Endprodukt-Spezifikationen und Vertriebs-Aufträgen, wobei ein Digitaldruck-Auftrag mindestens ein personalisiertes Druckprodukt definiert;
wobei eine Fördereinrichtung (10) mit mehreren Anlegern (21, 22, 23, 24, 25), eine Digitaldruckmaschine (30) und gegebenenfalls eine Einsteckvorrichtung (60) vorgesehen sind und die Steuerzentrale (100) ferner für die Steuerung folgender Herstellungsschritte eingerichtet ist:
Herstellen (S5), unter Benutzung der Fördereinrichtung (10) und den mehreren Anlegern (21, 22, 23, 24, 25), von Druckproduktkollektionen entsprechend den Vertriebs-Aufträgen,
Herstellen (S6), unter Benutzung der Digitaldruckmaschine (30), von personalisierten Druckprodukten entsprechend den Digitaldruck-Aufträgen, und
Herstellen (S7), unter Benutzung der Fördereinrichtung (10) oder der Einsteckvorrichtung (60), von personalisierten Druckendprodukten aus den hergestellten Druckproduktkollektionen und personalisierten Druckprodukten.

## Claims

1. An automated method for producing personalised printed end products, which in each case comprise a printed product collection and at least one personalised printed product, comprising:
creating (S1) end product specifications which in each case define at least one personalised printed end product,
creating (S2) sales orders on the basis of end product specifications, wherein a sales order defines at least one sequence of printed product collections,
initiating (S3) the creating and creating (S4) digital print orders on the basis of end product specifications and sales orders, wherein a digital print order defines at least one personalised printed product,
creating (S5) printed product collections according to the sales orders,
producing (S6) personalised printed products corresponding to the digital print orders, and
producing (S7) personalised printed end products from the created printed product collections and personalised printed products.

2. The method according to Claim 1, wherein the producing of personalised printed products is initiated in time prior to the producing of the printed product collections.

3. The method according to Claim 1 or 2, wherein produced personalised printed products are buffer-stored in a buffer store.

4. The method according to any one of the Claims 1 to 3, wherein during the producing of printed product collections defect monitoring is conducted and defective printed product collections are repaired or separated and re-produced.

5. The method according to Claim 4, wherein for a repaired or re-produced printed product collection an associated personalised printed product is re-produced.

6. The method according to any one of the Claims 1 to 5, wherein during the producing of a personalised printed end product a quality control is conducted and an associated quality marking affixed to the personalised printed end product.

7. The method according to any one of the Claims 1 to 6, wherein the personalised printed end product is assigned a control code which is affixed to the personalised printed end product.

8. The method according to any one of the Claims 1 to 7, wherein the creation of sales orders comprises an optimisation, which optimises an occupancy of feeding devices of a device for producing the personalised printed end products.

9. The method according to any one of the Claims 1 to 8, wherein the creation of sales orders comprises an optimisation, which optimises at least one delivery route of the personalised printed end products.

10. The method according to any one of the Claims 1 to 9, wherein at least one end product specification in the form of an XML document is provided.

11. The method to any one of the Claims 1 to 10, wherein at least one end product specification is provided in the form of an URL.

12. The method according to any one of the Claims 1 to 11, wherein a personalised printed end product is produced in such a manner that an addressee assigned to the personalised printed end product is enabled to influence the creating of an end product specification.

13. The method according to any one of the Claims 1 to 12, wherein a personalised printed end product is produced in such a manner that the same comprises a wrap product which wraps the printed product collection and the personalised printed product.

14. The method according to any one of the Claims 1 to 13, wherein a personalised printed end product is produced in such a manner that the personalised printed product is a cover which encloses the printed product collection.

15. The method according to any one of the Claims 1 to 14, wherein a personalised printed end product is produced in such a manner that the personalised printed end product comprises a printed product collection and a personalised printed product, which are bonded together, wherein the bond can be preferentially undone without damaging the products.

16. The method according to any one of the Claims 1 to 15, wherein personalised printed end products are arranged in packages taking into account delivery routes.

17. A production device for producing personalised printed end products comprising:
a control centre (100), which is equipped for the following steps:
creating (S1) end product specifications, which in each case define at least one personalised printed end product,
creating (S2) sales orders on the basis of end product specifications, wherein a sales order defines at least one sequence of printed product collections, and
initiating (S3) the creation and creating (S4) digital print orders on the basis of end product specifications and sales orders, wherein a digital print order defines at least one personalised printed product;
wherein a conveying device (10) with multiple feeders (21, 22, 23, 24, 25), a digital printing machine (30) and if applicable an insertion device (60) are provided and the control centre (100) is equipped furthermore for controlling the following production steps:
producing (S5), utilising the conveying device (10) and the multiple feeders (21, 22, 23, 24, 25), of printed product collections corresponding to the sales orders,
producing (S6), utilising the digital printing machine (30), personalised printed products corresponding to the digital print orders and
producing (S7), utilising the conveying device (10) or the insertion device (60), personalised printed end products from the produced printed product collections and personalised printed products.

## Revendications

1. Procédé automatique destiné à la fabrication de produits finis imprimés personnalisés lesquels présentent respectivement une collection de produits imprimés et au moins un produit imprimé personnalisé, comprenant:
la création (S1) de spécifications de produit fini, qui définissent respectivement au moins un produit fini imprimé personnalisé,
la création (S2) de commandes de distribution en se basant sur des spécifications de produit fini, dans lequel une commande de distribution définit au moins une séquence de collections de produits imprimés,
le déclenchement (S3) de la création et la création (S4) de commandes d'impressions numériques en se basant sur des spécifications de produit fini et des commandes de distribution, dans lequel une commande d'impression numérique définit au moins un produit imprimé personnalisé,
la fabrication (S5) de collections de produits imprimés correspondant aux commandes de distribution,
la fabrication (S6) de produits imprimés personnalisés correspondant aux commandes d'impression numérique, et
la fabrication (S7) de produits finis imprimés personnalisés à partir des collections de produits imprimés et des produits imprimés personnalisés fabriqués.

2. Procédé selon la revendication 1, dans lequel la fabrication de produits imprimés personnalisés est déclenchée temporellement avant la fabrication des collections de produits imprimés.

3. Procédé selon la revendication 1 ou 2, dans lequel des produits imprimés personnalisés fabriqués sont conservés en tampon dans une mémoire tampon.

4. Procédé selon l'une des revendications 1 à 3, dans lequel lors de la fabrication de collections de produits imprimés, une surveillance des erreurs est effectuée et les collections de produits imprimés défectueuses sont réparées ou retirées et produites ultérieurement.

5. Procédé selon la revendication 4, dans lequel un produit imprimé personnalisé faisant partie d'une collection de produits imprimés réparée ou produite ultérieurement est produit ultérieurement.

6. Procédé selon l'une des revendications 1 à 5, dans lequel lors de la fabrication d'un produit fini imprimé personnalisé, un contrôle qualité est effectué et un marquage de qualité correspondant est appliqué sur le produit fini imprimé personnalisé.

7. Procédé selon l'une des revendications 1 à 6, dans lequel un code de contrôle est attribué au produit fini imprimé personnalisé, lequel est appliqué sur le produit fini imprimé personnalisé.

8. Procédé selon l'une des revendications 1 à 7, dans lequel la création de commandes de distribution comprend une optimisation qui optimise une occupation de dispositifs d'acheminement d'un dispositif pour fabriquer les produits finis imprimés personnalisés.

9. Procédé selon l'une des revendications 1 à 8, dans lequel la création de commandes de distribution comprend une optimisation qui optimise au moins un trajet de livraison des produits finis imprimés personnalisés.

10. Procédé selon l'une des revendications 1 à 9, dans lequel au moins une spécification de produit fini sous la forme d'un document XML est prévue.

11. Procédé selon l'une des revendications 1 à 10, dans lequel au moins une spécification de produit fini sous la forme d'une URL est prévue.

12. Procédé selon l'une des revendications 1 à 11, dans lequel un produit fini imprimé personnalisé est ainsi fabriqué qu'il permet à un destinataire du produit fini imprimé personnalisé d'influencer la création d'une spécification de produit fini.

13. Procédé selon l'une des revendications 1 à 12, dans lequel un produit fini imprimé personnalisé est ainsi fabriqué que celui-ci comprend un produit d'enveloppement qui enveloppe la collection de produits imprimés et le produit imprimé personnalisé.

14. Procédé selon l'une des revendications 1 à 13, dans lequel un produit fini imprimé personnalisé est ainsi fabriqué que le produit imprimé personnalisé est une enveloppe qui entoure la collection de produits imprimés.

15. Procédé selon l'une des revendications 1 à 14, dans lequel un produit fini imprimé personnalisé est ainsi fabriqué que le produit fini imprimé personnalisé présente une collection de produits imprimés et un produit imprimé personnalisé qui sont collés l'un à l'autre, dans lequel le collage peut être de préférence séparé sans endommager les produits.

16. Procédé selon l'une des revendications 1 à 15, dans lequel des produits finis imprimés personnalisés sont disposés en paquets en tenant compte des trajets de livraison.

17. Dispositif de production pour fabriquer des produits finis imprimés personnalisés, comprenant:
une centrale de commande (100) qui est conçue pour les étapes suivantes:
la création (S1) de spécifications de produit fini, qui définissent respectivement au moins un produit fini imprimé personnalisé,
la création (S2) de commandes de distribution en se basant sur des spécifications de produit fini, dans lequel une commande de distribution définit au moins une séquence de collections de produits imprimés, et
le déclenchement (S3) de la création et la création (S4) de commandes d'impressions numériques en se basant sur des spécifications de produit fini et des commandes de distribution, dans lequel une commande d'impression numérique définit au moins un produit imprimé personnalisé ;
dans lequel un dispositif de transport (10) comprenant plusieurs placeurs (21, 22, 23, 24, 25), une machine d'impression numérique (30) et le cas échéant un dispositif enfichable (60) sont prévus et la centrale de commande (100) est en outre conçue pour la commande des étapes de fabrication suivantes :
la fabrication (S5), en utilisant le dispositif de transport (10) et les plusieurs placeurs (21, 22, 23, 24, 25), de collections de produits imprimés correspondant aux commandes de distribution,
la fabrication (S6) en utilisant la machine d'impression numérique (30), de produits imprimés personnalisés correspondant aux commandes d'impression numérique, et
la fabrication (S7) en utilisant le dispositif de transport (10) et le dispositif enfichable (60), de produits finis imprimés personnalisés à partir des collections de produits imprimés et des produits imprimés personnalisés fabriqués.
